(19) Europäisches Patentamt
European Patent Office
Office européen des brevets

(11) **EP 4 269 073 A1**

(12) **EUROPÄISCHE PATENTANMELDUNG**

(43) Veröffentlichungstag:
01.11.2023   Patentblatt 2023/44

(21) Anmeldenummer: **22170872.0**

(22) Anmeldetag: **29.04.2022**

(51) Internationale Patentklassifikation (IPC):
*B29C 64/393* [(2017.01)]   *B33Y 10/00* [(2015.01)]
*B33Y 50/02* [(2015.01)]   *B22F 10/28* [(2021.01)]
*B22F 10/366* [(2021.01)]   *B22F 10/368* [(2021.01)]
*B22F 10/80* [(2021.01)]

(52) Gemeinsame Patentklassifikation (CPC):
(C-Sets verfügbar)
**B29C 64/393; B22F 10/28; B22F 10/80;
B33Y 10/00; B33Y 50/00;** B22F 2999/00   (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Heinrichsdorff, Frank**
**14513 Teltow (DE)**
• **Kastsian, Darya**
**14612 Falkensee (DE)**
• **Reznik, Daniel**
**13503 Berlin (DE)**

(74) Vertreter: **Siemens Patent Attorneys**
**Postfach 22 16 34**
**80506 München (DE)**

(54) **ERMITTELN EINES TEMPERATURVERLAUFS EINER SCHICHT**

(57)   Offenbart wird ein computerimplementiertes Verfahren zum Ermitteln eines Temperaturverlaufs (T) einer Schicht (100), für ein selektives Verfestigen der Schicht (100) mittels eines Laser- oder Elektronenstrahls für ein pulverbasiertes additives Fertigungsverfahren auf Basis eines Modells (210). Die Offenbarung betrifft weiterhin ein Ermitteln einer von einer lokalen Tiefe (lt) abhängigen Parameterfunktion (fd, fl) für ein Modell (210) der Schicht (100) für ein Verfahren zum Ermitteln eines Temperaturverlaufs (T), ein Verfahren zum Validieren von Belichtungsvektoren (V1,Vn) sowie ein Verfahren zum selektiven Verfestigen einer Schicht (100) eines Objekts (10).

FIG 6

EP 4 269 073 A1

**(Forts. nächste Seite)**

(52) Gemeinsame Patentklassifikation (CPC): (Forts.)

C-Sets
B22F 2999/00, B22F 10/80, B22F 10/366,
B22F 10/368

**Beschreibung**

Die Erfindung betrifft ein Verfahren zum Ermitteln eines Temperaturverlaufs einer Schicht mittels eines Modells, ein Verfahren zum Ermitteln einer Parameterfunktion für das Modell, ein Verfahren zum Validieren von Belichtungsvektoren sowie ein Verfahren zum Herstellen einer Schicht eines Objekts.

Derartige Verfahren kommen beispielsweise bei pulverbasierten additiven Fertigungsverfahren mit Laser- oder Elektronenstrahlen zum Einsatz.

Der Erfindung liegt die Aufgabe zugrunde, die thermische Simulation von einzelnen Schichten vor oder während der Produktion zu verbessern.

Diese Aufgabe wird durch ein Verfahren mit den im Anspruch 1 angegebenen Merkmalen gelöst.

Zum Ermitteln eines Temperaturverlaufs einer Schicht, die ein Querschnitt eines Objekts ist, für ein selektives Verfestigen der Schicht mittels eines Laser- oder Elektronenstrahls für ein pulverbasiertes additives Fertigungsverfahren umfasst das Verfahren die folgenden Schritte:

- Bereitstellen von Belichtungsvektoren für die Schicht,
- Bereitstellen eines Modells der Schicht und
- Ermitteln des Temperaturverlaufs durch thermische Simulation eines Abtastens der Schicht mit den Belichtungsvektoren anhand des Modells.

Das Modell repräsentiert dabei die Schicht und einen unterhalb der Schicht liegenden Anteil des Objekts in Form eines Querschnitts. Der Querschnitt hat die Form der Schicht und berücksichtigt einen unterhalb der Schicht liegenden Anteil des Objekts in Form einer ortsabhängigen spezifischen Wärmekapazität und eines ortsabhängigen thermischen Widerstands.

Dies ermöglicht es, die Komplexität der thermischen Simulation eines 3D-Modells in einem vereinfachten Modell darzustellen, wobei das Modell keine Z-Abhängigkeit aufweist und die Dreidimensionalität in zwei Dimensionen durch ortsabhängige spezifische Wärmekapazitäten und ortsabhängige thermische Widerstände berücksichtigt wird. Dies hat den großen Vorteil, dass nicht im Dreidimensionalen gerechnet werden muss, sondern im Zweidimensionalen gerechnet werden kann. Die Schicht kann dabei als Festkörper modelliert sein, die Pulverform also vernachlässigt werden. Die Temperatur des unterhalb der Schicht liegenden Anteils kann dabei als Bauplattentemperatur approximiert oder quasistatisch zur Ermittlung einer Umgebungstemperatur berechnet werden.

Es wird davon ausgegangen, dass das Modell mit den Materialparametern des aufzubauenden Objekts erstellt wird, also für ein Material wird, aus dem auch das Objekt aufgebaut wird.

Die Belichtungsvektoren beinhalten dabei eine Information über die Leistung des Strahls, die Strahlbreite und in welcher Geschwindigkeit an welchem Ort der Schicht sich der Strahl bewegt. Dies kann entweder über eine Geschwindigkeit mit einem Start- und Endpunkt oder einer Ortskoordinate mit einer Zeitkoordinate geschehen. Vektordatensätze der Schicht können also alle Belichtungsvektoren enthalten, die zur Abtastung einer Schicht zum Einsatz kommen und beschreiben somit einen Leistungseintrag in die Schicht vollständig. Derartige Belichtungsvektoren können als Eingangsparameter bei üblichen 3D-Druckanlagen als Maschinenparameter zum Einsatz kommen. Die technischen Informationen des Objekts werden dabei vorzugsweise in einem 3D-CAD-Modell des Objekts zur Verfügung gestellt. Das 3D-CAD-Modell beinhaltet dabei u. a. das Material des Objekts, die Dichte des Objekts, die physikalischen Dimensionen des Objekts und die Schichten des Objekts. Solche 3D-CAD-Modelle werden in der Regel bei der Konstruktion eines Objekts erstellt. Durch die Ortsabhängigkeit der Wärmekapazität und des thermischen Widerstands lässt sich auch im zweidimensionalen Fall eine hohe Genauigkeit, wie bei Simulationen im dreidimensionalen Fall bei erheblicher Einsparung von Rechenzeit erlangen. Dies ermöglicht die Verwendung des Verfahrens unmittelbar vor der Produktion oder sogar während der Produktion, z.B. für die Belichtung von folgenden Schichten.

In einer weiteren Ausführungsform der ortsabhängige thermische Widerstand als erste Parameterfunktion in Abhängigkeit einer lokalen Tiefe und/oder die ortsabhängige spezifische Wärmekapazität als zweite Parameterfunktion in Abhängigkeit einer lokalen Tiefe bestimmt. Durch die Abhängigkeit der lokalen Tiefe lassen sich die Eigenschaften des dreidimensionalen Problems verbessert auf das zweidimensionale Modell abbilden. Die lokale Tiefe kann dabei als die Z-Ausdehnung des Objekts unterhalb der Schicht jeweils senkrecht unterhalb des betrachteten Punkts betrachtet werden. Es können auch Volumen, z.B. Ellipsoide betrachtet werden, die effektive Volumen unterhalb des Punktes darstellen. Hierzu könnte ein Integral über eine Halbkugel und/oder über einen Zylinder unter der Schicht um einen betrachteten Punkt herum durchgeführt werden. Der entsprechende Grenzfall ist, wie eingangs beschrieben, die tatsächliche lokale Tiefe. Die lokale Tiefe kann dabei aus dem 3D-CAD-Modell extrahiert werden. Je nach Ausgestaltung des Objekts kann es sich vorteilhaft erweisen, die senkrechte Ausdehnung zu verwenden oder die Volumenausdehnung unterhalb des Objekts. Wird ein Volumen verwendet, so lassen sich Sprünge in der lokalen Tiefe bei rechtwinkligen Strukturen im Objekt vermeiden, was der Berechnung (und der Differenzierung der Funktion) entgegenkommen kann. Der ortsabhängige thermische Widerstand (RTH) wird durch eine erste Parameterfunktion (fl) berücksichtigt und die ortsabhängige Wärmekapazität (CTH) durch eine zweite Parameterfunktion (fd). Man könnte den Widerstand und die Kapazität auch als einen ortsabhängigen Belag bezeichnen.

In einer weiteren Ausführungsform berücksichtigt das Modell einen Wärmeverlust in dem unterhalb der Schicht liegenden Anteil durch einen ersten Quellterm in einer zeit- und ortsabhängigen Wärmeleitungsgleichung. Durch den Quellterm, der insbesondere negativ ist, kann die Z-Abhängigkeit im Modell eliminiert werden und somit eine zweidimensionale Berechnung durchgeführt werden. Es kann dabei davon ausgegangen werden, dass sich der Wärmeverlust durch Diffusion, also Wärmeleitung ausdrückt.

In einer weiteren Ausführungsform berücksichtigt der erste Quellterm einen ortsabhängigen Belag des thermischen Widerstands durch eine erste Parameterfunktion. Ergänzend oder alternativ berücksichtigt der Quellterm einen ortsabhängigen Belag der Wärmekapazität durch eine zweite Parameterfunktion. Das Verwenden von Parameterfunktionen ermöglicht eine hinreichend genaue Abbildung des thermischen Widerstands und der Wärmekapazität aus dem dreidimensionalen Fall auf die Schicht bzw. das Modell der Schicht. Als thermische Beläge werden flächenbezogene zusammengefasste thermische Eigenschaften bezeichnet.

In einer weiteren Ausführungsform ist die erste Parameterfunktion ein Realteil und die zweite Parameterfunktion ein Imaginärteil eines ortsabhängigen komplexwertigen thermischen Impedanzbelags für die ortsabhängige Definition der spezifischen Wärmekapazität und der ortsabhängigen Definition des thermischen Widerstands. Es hat sich als besonders vorteilhaft herausgestellt, einen derartig komplexwertigen Impedanz-belag für die thermischen Eigenschaften zu verwenden, da sich so eine höhere Genauigkeit bei einfacherer Berechenbarkeit im Vergleich des 2D-Modells mit dem 3D-Modell bietet. Die erste Parameterfunktion stellt dabei den thermischen Widerstand als Realteil und die zweite Parameterfunktion die spezifische Wärmekapazität als Imaginärteil des ortsabhängigen komplexwertigen thermischen Impedanzbelags dar.

In einer weiteren Ausführungsform berücksichtigt das Modell eine Wärmeeinkopplung durch den Laser- oder Elektronenstrahl in die Schicht durch einen zweiten Quellterm in einer zeit- und ortsabhängigen Wärmeleitungsgleichung. Die Wärmeeinkopplung wird dabei auf Basis der Belichtungsvektoren berechnet. Es kann also durch den ersten und den zweiten Quellterm die Wärmeeinkopplung und die Entwärmung durch den unter der Schicht liegenden Anteil beschrieben werden.

In einer weiteren Ausführungsform sind die ortsabhängige spezifische Wärmekapazität und/oder der ortsabhängige thermische Widerstand jeweils als diskrete Werte an definierbaren Knotenpunkten und/oder als kontinuierliche Funktionen über den Querschnitt definiert. Es ist möglich bei kontinuierlichen und über das Tiefenprofil weitestgehend unveränderlichen Strukturen eine Funktion zu definieren. Bei sehr komplexen Strukturen ist es möglich abschnittsweise durch eine entsprechende Diskretisierung Werte an definierbaren Knotenpunkten anzugeben. Das verwendete Simulationsverfahren kann dabei auch einen Einfluss haben. Es kann eine kontinuierliche Funktion für ein Finite-Elemente-Verfahren verwendet werden und eine diskrete Darstellung für ein Finite-Volumina oder Finite-Differenzen-Verfahren.

Die Aufgabe wird weiterhin durch ein Verfahren zum Ermitteln einer Parameterfunktion für ein Modell gelöst. Die Parameterfunktion ist dabei von einer lokalen Tiefe abhängig und für ein erfindungsgemäßes Verfahren zum Ermitteln eines Temperaturverlaufs geeignet. Das Modell weist, wie eingangs beschrieben, die Form eines Querschnitts eines Objekts auf, wobei der Querschnitt eine Schicht repräsentiert und die unterhalb der Schicht liegenden Anteile des Objekts in Form einer ortsabhängigen spezifischen Wärmekapazität und eines ortsabhängigen thermischen Widerstands berücksichtigt. Das Verfahren umfasst dabei die im Folgenden beschriebenen Schritte.

Bestimmen eines ersten Temperaturverlaufs durch thermische Simulation eines Testkörpers bei Bestrahlung durch Belichtungsvektoren, die so weit von den Grenzen des Testkörpers entfernt liegen, dass sich der Testkörper bezüglich des Temperaturverlaufs wie ein unendlicher Halbraum verhält. In anderen Worten sind die Belichtungsvektoren so auf einem entsprechend dimensionierten Körper angeordnet, dass die Erwärmung, die durch die Belichtungsvektoren an der bestrahlten Oberfläche entsteht, nicht die übrigen Grenzen des Körpers erreicht, sondern im Körper eine Erwärmung erzielt, diese Erwärmung aber die Grenzen nicht erreicht.

In einem weiteren Schritt werden aus diesem ersten Temperaturverlauf Startparameter für das Modell bestimmt. D.h. es wird ein erster Startparameter für den thermischen Widerstand und ein zweiter Startparameter für die spezifische Wärmekapazität für einen großen Körper bestimmt. Da sich der Testkörper in diesem Fall wie ein unendlicher Halbraum verhält, konvergieren die Parameterfunktionen gegen die Werte der Startparameter.

In einem Schritt wird zumindest ein zweiter Temperaturverlauf durch thermische Simulation eines zweiten Testkörpers bestimmt. Die Belichtungsvektoren sind dabei derartig auf dem zweiten Testkörper angeordnet, dass der Testkörper Eigenschaften eines begrenzten Raums hinsichtlich des Temperaturverlaufs aufweist. In anderen Worten ist die lokale Tiefe unterhalb der Belichtungsvektoren so begrenzt, dass eine Erwärmung bis an die Grenzen des Körpers stattfindet. So lässt sich das Verhalten des Modells bei begrenzten Körpern modellieren.

In einem weiteren Schritt wird nun jeweils eine Parameterfunktion für die spezifische Wärmekapazität und dem thermischen Widerstand ermittelt, sodass sich ein mittels des Modells ermittelter Temperaturverlauf dem ersten und dem zweiten Temperaturverlauf der Testkörper anpasst. Insbesondere wird jeweils auf Basis der Startparameter eine Parameterfunktion ermittelt, die neben dem unendlichen Grenzfall auch begrenzte Körper durch eine Abhängigkeit von der lokalen Tiefe abbildet.

In einer weiteren Ausführungsform konvergieren die Parameterfunktionen ab einer hinreichend großen lokalen Tiefe gegen die Startparameter. Die Temperaturverteilung verhält sich dort wie in einem unendlich großen Halbraum, dementsprechend können hier die Startparameter angesetzt werden.

In einer weiteren Ausführungsform konvergiert die zweite Parameterfunktion gegen einen kleineren Wert als der zweite Startparameter, wenn die lokale Tiefe sehr klein ist. Dies kann beispielsweise direkt beim Beginn des Herstellungsprozesses der Fall sein, wenn noch wenige Schichten unterhalb der aktuellen Schicht existieren.

Die erste Parameterfunktion konvergiert gegen einen größeren Wert als der erste Startparameter. Die erste Parameterfunktion modelliert dabei den ortsabhängigen thermischen Widerstand und die zweite Parameterfunktion die ortsabhängige Wärmekapazität.

In einer weiteren Ausführungsform sind die Parameterfunktionen monoton. Eine durchgehende Differenzierbarkeit der Parameterfunktionen ist nicht erforderlich.

Allgemein haben sich für die Parameterfunktionen folgendes als vorteilhaft erwiesen:

- Für hinreichend große Werte der lokalen Tiefe sollen die Funktionen gegen die Startwerte konvergieren.
- Für eine lokale Tiefe, die gegen 0 geht, soll die erste Parameterfunktion ($f_1$, thermischer Widerstand) gegen einen großen Wert (keine/kaum effektive Entwärmung nach unten) gehen.
- Für eine lokale Tiefe, die gegen 0 geht, soll die zweite Parameterfunktion ($f_d$, repräsentiert eine spezifische Wärmekapazität) gegen einen kleinen Wert (kleine Dicke) gehen.
- Es kann davon ausgegangen werden, dass die Parameterfunktionen monoton sind.
- Als praktikabler Ansatz erweist sich eine abfallende Exponentialfunktion für die erste Parameterfunktion ($f_1$, thermischer Widerstand, RTH) und
- eine stückweise lineare Funktion für die zweite Parameterfunktion ($f_d$, repräsentiert eine spezifische Wärmekapazität, CTH).

Die erste Parameterfunktion stellt dabei den thermischen Widerstand als Realteil und die zweite Parameterfunktion die spezifische Wärmekapazität als Imaginärteil des ortsabhängigen komplexwertigen thermischen Impedanz-Belags dar.

Die Aufgabe wird weiterhin durch ein Verfahren zum Validieren von Belichtungsvektoren gelöst. Das Validieren soll hier so verstanden werden, dass die Belichtungsvektoren keine Überhitzungen oder zu hohe Temperaturen der Schicht über eine zu lange Zeit produzieren. Mit anderen Worten kann mit den validierten Belichtungsvektoren problemlos eine Schicht verfestigt werden, ohne dass temperaturbedingte Probleme auftreten. Zum Validieren der Belichtungsvektoren zum selektiven Verfestigen einer Schicht eines Objekts mittels eines Laser- oder Elektronenstrahls für ein pulverbasiertes additives Fertigungsverfahren werden die folgenden Schritte vorgeschlagen:

- Bereitstellen von Belichtungsvektoren für die Schicht,
- Ermitteln eines Temperaturverlaufs der Schicht mittels des erfindungsgemäßen Verfahrens, das eingangs beschrieben wurde und
- Validieren des Temperaturverlaufs anhand ein oder mehrerer Kriterien.

In einer weiteren Ausführungsform dient als Kriterium eine Dauer der Temperatur über einer Grenztemperatur. Verharrt die Temperatur im Temperaturverlauf zu lange über der Grenztemperatur, so verschlechtert sich die Qualität der Schicht erheblich und kann bis hin zu einem notwendigen Abbruch des Fertigungsprozesses führen.

In einer weiteren Ausführungsform dient als Kriterium eine absolute Maximaltemperatur. Überschreitet der Temperaturverlauf eine absolute Maximaltemperatur, also beispielsweise eine Verdampfungstemperatur des Materials, so sind die verwendeten Belichtungsvektoren ungeeignet und müssen verworfen werden.

In einer weiteren Ausführungsform dient als Kriterium eine maximale Fläche oberhalb einer Temperatur. Da der Temperaturverlauf zweidimensional bestimmt wird, können ebenso Flächen betrachtet werden. Insbesondere von interessant ist die maximale Größe eines Schmelzbades, d. h. eine Fläche, die eine Temperatur oberhalb der Schmelztemperatur des verwendeten Materials aufweist. Wird eine maximale Fläche des Schmelzbades überschritten, so kann es zu ungleichmäßigen Erstarrungsformen kommen, was sich ebenfalls negativ auf die Qualität des Objekts auswirkt.

Die genannten Kriterien sollen also unterschritten werden. Als weitere Optimierungskriterien können dabei eine gesamte Zeitdauer der Belichtungsvektoren dienen, d. h. wie lange für das Abtasten des gewählten Belichtungsvektormuster benötigt wird, um die gesamte Schicht zu belichten. Dabei können herkömmliche Optimierungsverfahren beim Vergleich von mehreren Belichtungsvektoren bzw. Belichtungsvektorscharen untereinander verwendet werden.

Die Aufgabe wird weiterhin durch ein Verfahren zum selektiven Verfestigen einer Schicht gelöst. Die Schicht ist dabei Teil eines Objekts, das mittels eines Laser- oder Elektronenstrahls durch ein pulverbasiertes additives Fertigungsverfahren gefertigt werden soll. Das Verfahren umfasst dabei die Schritte Bereitstellen von Belichtungsvektoren, die mittels eines Verfahrens zum Validieren der Belichtungsvektoren validiert wurden und Abtasten der Schicht durch den Energiestrahl mit den Belichtungsvektoren.

Allgemein und in anderen Worten fungiert die lokale thermische Impedanz als Stellvertreterin der dritten Dimension und kann entweder als eine Wolke diskreter Werte (thermische Impedanzen sind nur an Knotenpunkten definiert) oder als eine kontinuierliche (über einen räumlich variablen Impedanz-Belag) Funktion des Ortes definiert sein.

Die verwendeten Werte der Knotenimpedanzen oder der Impedanzbelagfunktion sind der geometrischen Verteilung des Materials unterhalb der simulierten Ebene angepasst. Im Falle eines im Verhältnis zu den Belichtungsvektoren großen Körpers ist die Massenverteilung unterhalb der betrachteten Ebene gleich, und die Impedanz-Belag-Funktion wäre räumlich konstant.

Wenn die Masseverteilung (Geometrie) ungleichmäßig ist, so müssen in einem geeigneten Abschnitt, z. B. unterhalb keilförmigen Überhangen die Werte der Impedanz-Belag-Funktion lokal angepasst werden (der resistive Anteil müsste steigen, der kapazitive Anteil sinken).

Eine Wärmeleitungsgleichung ohne Z-Abhängigkeit, die aber den unter der Schicht liegenden Anteil berücksichtigt, kann dabei wie folgt ausgestaltet sein:

$$\rho c_p \frac{\partial T}{\partial t} + \nabla \cdot J_{th} = Q_N(x,y) + Q_L(x,y,t) \quad (1)$$

$$Q_N = -\frac{\kappa}{f_l(l_t) \cdot f_d(l_t)} \cdot \left( T - T_{ref} \right) \quad (2)$$

$$J_{th} = -\kappa \nabla T \quad (3)$$

| | |
|---|---|
| $T_{ref}$ | Referenztemperatur |
| $h\ [W/(m^2 K)]$ | Wärmeübergangskoeffizient |
| $\rho$ | Dichte |
| $c_p$ | Wärmekapazität |
| $\kappa$ | Wärmeleitfähigkeit |
| $J_{th}$ | Wärmestromdichte |
| $Q_L$ | Quellterm des Laser- oder des Elektronenstrahls, kann beispielsweise als Gauß-förmige Strahlungsquelle betrachtet werden |
| $Q_N$ | Quellterm, der einen Wärmeverlust in den unterhalb der Schicht liegenden Anteil des Objekts repräsentiert |
| $f_l$ | erste Parameterfunktion; repräsentiert einen thermischen Widerstand, kann als charakteristische Länge definiert werden und ist ein thermischer Widerstandsbelag |
| $f_d$ | zweite Parameterfunktion; repräsentiert eine spezifische Wärmekapazität, kann als charakteristische Dicke definiert werden und ist damit ein thermischer Kapazitätsbelag |

Im Folgenden wird die Erfindung anhand der in den Figuren dargestellten Ausführungsbeispiele näher beschrieben und erläutert. Es zeigen:

FIG 1    schematisch ein Objekt,
FIG 2    schematisch einen Anteil des Objekts,
FIG 3    schematisch ein 3D Modell eines Quaders,
FIG 4    schematisch ein 2D Modell einer Schicht,
FIG 5    den Modellierungsprozess im Detail,
FIG 6    einen Testkörper zur Bestimmung von Startparametern,
FIG 7    Testkörper zur Parametrierung,
FIG 8    Testkörper zur Parametrierung,
FIG 9    einen Temperaturverlauf,
FIG 10    einen weiteren Temperaturverlauf und
FIG 11    ein vereinfacht dargestelltes Modell.

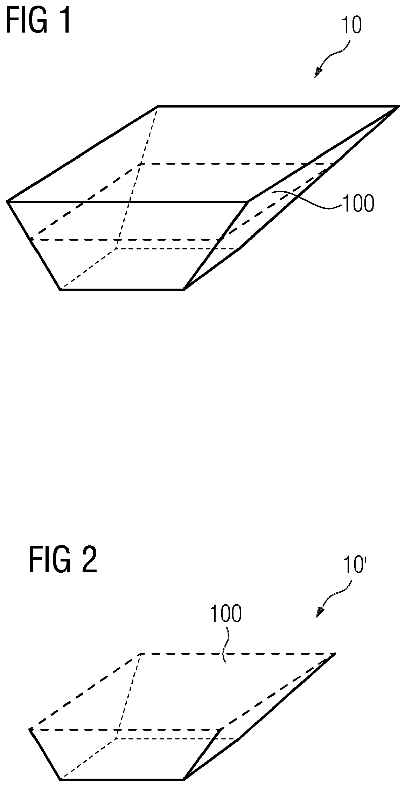

FIG 1 zeigt ein Objekt 10, das einen nicht umgedrehten Pyramidenstumpf darstellt, dessen Winkel nicht gleichmäßig verteilt sind. Eine Schicht 100 ist dabei ebenso eingezeichnet und stellt dabei einen Querschnitt des Objekts 10 in der Ebene der Schicht 100 dar.

FIG 2 zeigt das Objekt 10, wobei es nur bis zur Schicht 100 hergestellt wurde, d. h. also beispielsweise während des Fertigungsprozesses, wobei ein unterhalb der Schicht befindlicher Anteil 10' gekennzeichnet ist. Der Anteil 10' ist für die thermischen Eigenschaften der Schicht 100 maßgeblich.

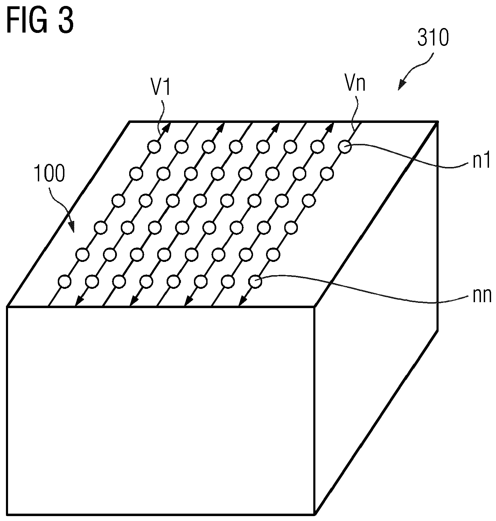

FIG 3 zeigt ein dreidimensionales Modell 310 eines Quaders. Auf dem Modell 310 des Quaders sind Belichtungsvektoren V1, Vn eingezeichnet. Die acht Belichtungsvektoren V1, Vn sind dabei von der Richtung her immer abwechselnd und parallel zueinander angeordnet. Die Belichtungsvektoren V1, Vn sind dabei diskretisiert und weisen Knotenpunkte n1, ..., nn auf. An jedem der Knotenpunkte n1, nn hat das Modell 310 thermische Eigenschaften. Diese sollen nun in einem 2D-Modell überführt werden.

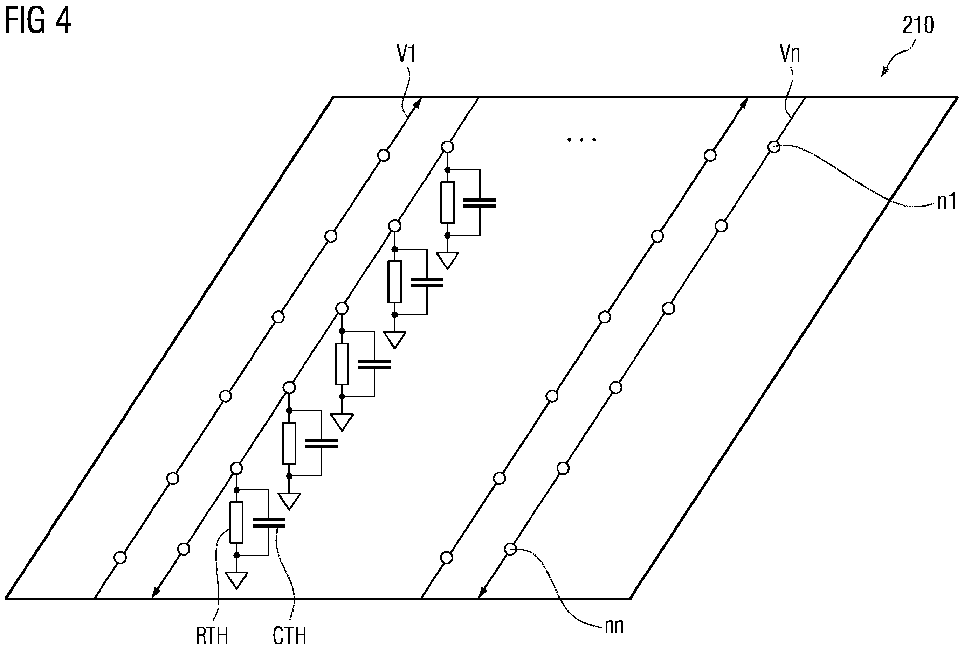

FIG 4 zeigt ein zweidimensionales Modell 210 der obersten Schicht 100, wobei jedem der Knoten n1, nn, hier nur für einen der Vektoren V1, Vn dargestellt, jeweils ein thermischer Widerstand RTH und eine spezifische Wärmekapazität CTH zugewiesen ist. Diese thermischen Parameter, die auch als Impedanz-Belag bezeichnet werden können, bilden das Modell 310 auf das zweidimensionale Modell 210 ab. Somit handelt es sich um eine zweidimensionale Repräsentation des Modells 310, wobei die Z-Achse durch die thermischen Eigenschaften RTH, CTH berücksichtigt werden.

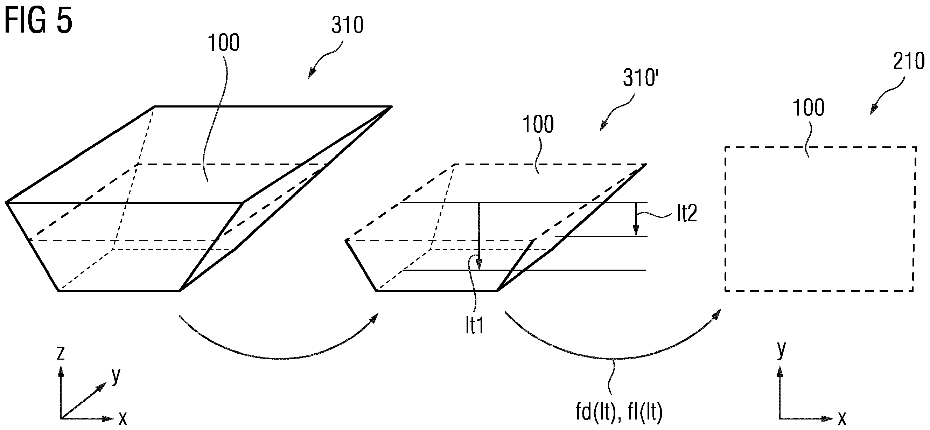

FIG 5 zeigt den Modellierungsprozess im Detail. Dazu ist das 3D-Modell 310 zu sehen, in dem sich die Schicht 100 befindet. Ein Koordinatensystem mit den Koordinaten x,y,z ist eingezeichnet, wobei sich die Schicht 100 in einer Ebene befindet, die durch die X- und die Y-Achse definiert ist. Das Objekt 310 wird in Z-Richtung aufgebaut. Im Modellierungsprozess soll nun die Abhängigkeit von der Z-Richtung eliminiert werden.

Ein dreidimensionales Teilmodell 310', das nur bis zur Schicht 100 aufgebaut ist, weist unterschiedliche lokale Tiefen lt1, lt2 auf. Die Modellierung des Modells 210 soll diese unterschiedlichen lokalen Tiefen lt1,lt2 und deren Einfluss auf die jeweils lokalen thermischen Eigenschaften berücksichtigen. Da additiv zu fertigende Objekte im Allgemeinen deutlich komplexere Geometrien und dementsprechend unterschiedliche lokale Tiefen aufweisen können, müssen diese im zweidimensionalen Fall berücksichtigt werden. Dies wird durch eine erste Parameterfunktion fl(lt) in Abhängigkeit der lokalen Tiefe lt und eine zweite Parameterfunktion fd(lt) ebenfalls in Abhängigkeit der lokalen Tiefe berücksichtigt. Die erste Parameterfunktion fl repräsentiert dabei den thermischen Widerstand RTH und die zweite Parameterfunktion fd repräsentiert die spezifische Wärmekapazität CTH. So kann im letzten Schritt ein Modell 210 erstellt werden, das zweidimensional ist und die Schicht 100 auch zweidimensional abbildet. Dabei werden die erste Parameterfunktion fl und die zweite Parameterfunktion fd verwendet werden.

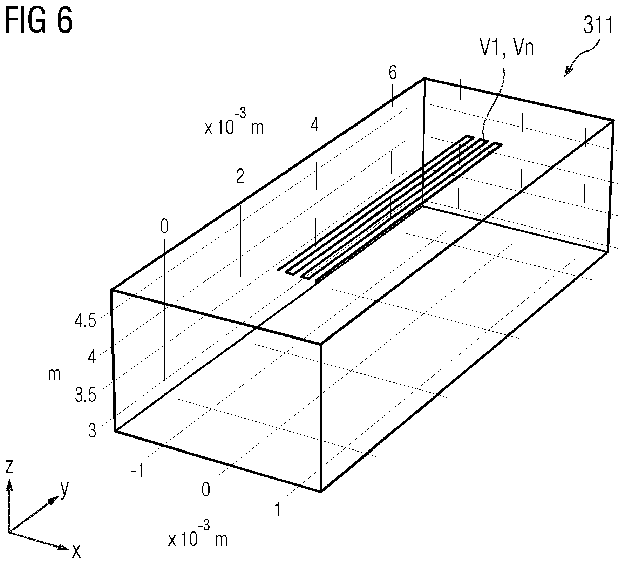

FIG 6 zeigt einen Körper für einen ersten Schritt zur Parametrierung der Parameterfunktionen fd, fl, bzw. zum Ermitteln der im Grenzfall auftretenden Startparameter. Dazu ist ein Testkörper 311 gezeigt, der im Verhältnis zu den eingezeichneten Belichtungsvektoren V1, Vn eine große Ausdehnung aufweist. In einer einfachen Form kann es sich bei dem Testkörper 311 um einen Quader handeln, auf dessen Oberfläche die Belichtungsvektoren V1, Vn angeordnet sind. Diese können auf einer Oberfläche des Quaders so mittig angeordnet sein, dass die thermischen Auswirkungen der Belichtungsvektoren die Ränder nie erreichen. Da es sich hier um gleichmäßige, nämlich sehr große bzw. im Verhältnis unendlich große, lokalen Tiefen lt handelt, ist es aus Berechnungssicht möglich einen einfachen und entsprechend großen Körper zu nehmen. Eine thermische Simulation der auf dem Testkörper eingezeichneten Vektoren V1,Vn liefert einen Temperaturverlauf, aus dem dann die Startparameter ermittelt werden können.

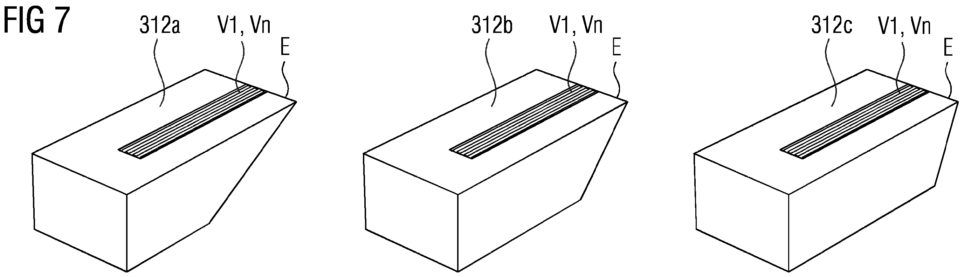

FIG 7 zeigt drei weitere Testkörper 312a, 312b, 312c, wobei jeweils die Belichtungsvektoren senkrecht zu einer Überhangkante E angeordnet sind. Der Testkörper 312a weist dabei einen Überhangwinkel von 30°, der Testkörper 312b einen Überhangwinkel von 45° und der Testkörper 312c einen Überhangwinkel von 60° auf. Es hat sich gezeigt, dass mit diesen drei Winkeln oder einer Kombination von zumindest zwei dieser Überhangwinkel das Verhalten der Temperatur auch für allgemeinere Fälle gut abgebildet werden kann. Die Belichtungsvektoren V1,Vn laufen in Richtung einer geringer werdenden lokalen Tiefe lt oder aus Richtung einer immer größer werdenden lokalen Tiefe lt, je nach Richtung des Vektors.

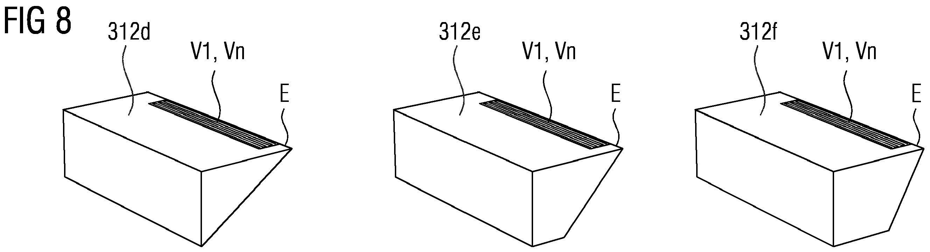

FIG 8 zeigt drei ähnliche Testkörper 312d, 312e und 312f, wobei die Belichtungsvektoren V1, Vn parallel zur Überhangkante E angeordnet sind. Hier wird von Belichtungsvektor zu Belichtungsvektor die Stärke bzw. die lokale Tiefe lt immer geringer bzw. immer größer, was zu einer erheblichen Veränderung der Temperatur führen kann und dementsprechend in die Modellbildung einfließen sollte.

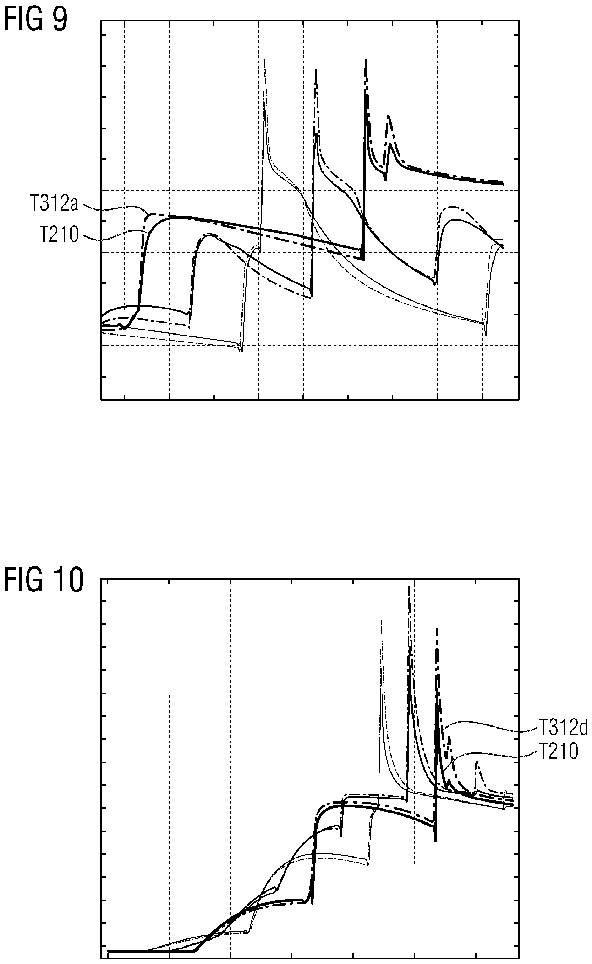

FIG 9 zeigt einen tatsächlichen Temperaturverlauf T312a, wie er auf drei Punkten auf einem der Belichtungsvektoren V1, Vn aussehen würde. Die betrachteten Punkte, die jeweils einen eigenen Graphen haben, liegen dabei auf einem Belichtungsvektor, der vorzugsweise bereits einige Vorgängervektoren aufweist, da sich so eine gewisse Temperatur einstellt, die bei Betrachtung eines der ersten Belichtungsvektoren V1, Vn noch nicht eingestellt ist. Zu sehen ist ein Temperaturverlauf T312a, der aus der 3D-Berechnung des Testkörpers 312a stammt und ein Temperaturverlauf T210, der nach Anpassung der Parameter auf Basis der Parameterfunktionen, die abhängig jeweils von der lokalen Tiefe sind, aus der Berechnung des zweidimensionalen Modells 210 stammt. Zu sehen ist, dass eine sehr gute Übereinstimmung erzielt werden konnte. Es können dabei alle Fälle (alle Testkörper) verwendet werden. Bevorzugt wird ein Winkel (z.B. der mittlere mit 45°) in den zwei Ausführung senkrecht und parallel zur Kante E zuerst verwendet, und dann überprüft, ob die Ergebnisse für 60° und 30° den Erwartungen entsprechend und ggf. werden die Parameter der Funktionen fl und fd angepasst.

FIG 10 zeigt analog zu FIG 9 einen Temperaturverlauf T312d des Testkörpers 312d, ebenfalls betrachtet an drei Punkten auf einem der Vektoren V1,Vn. Auch hier konnte eine gute Übereinstimmung des zweidimensionalen Modells mit den Ergebnissen aus dem dreidimensionalen Modell erzielt werden.

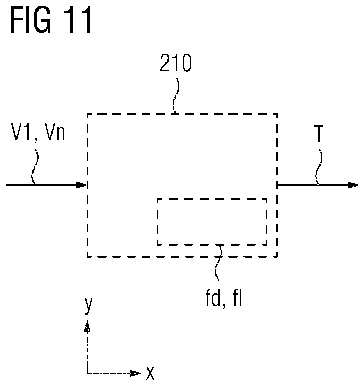

FIG 11 zeigt noch vereinfacht dargestellt die Eingangsgrößen des Modells 210, nämlich beliebige Belichtungsvektoren V1,Vn, die auf ein zweidimensionales Modell 210, das eine Schicht 100 darstellt, einwirken. Das Modell 210 weist als Parameter neben den Parameterfunktionen fd, fl noch die entsprechenden Materialparameter auf. Dichte, Wärmekapazität und Wärmeleitfähigkeit bilden die thermophysikalischen Eigenschaften und stellen die Materialparameter dar, die einen Feststoff bezüglich der thermischen Simulation vorliegend ausreichend beschreiben. Das so beschriebene Modell ermöglicht eine schnelle und genaue Simulation und Validierung von Belichtungsvektoren V1,Vn bis hin zu einer Anwendung während des Fertigungsprozesses. Das Modell 210 kann dabei im Speicher eines Simulationsrechners hinterlegt und in dessen Prozessor ausgeführt werden. Durch die Reduktion auf ein zweidimensionales Modell mit einer Abhängigkeit der thermischen Eigenschaften von der lokalen Tiefe lt kann eine erhebliche Einsparung von Rechenzeit erreicht werden und es können auch Fertigungsnahe Rechner eine solche Simulation durchführen. Das Modell 210 kann dementsprechend in noch kürzerer Zeit auf speziellen Simulationsrechnern berechnet werden und beispielsweise Cloudgestützt auch in der Fertigung zur Verfügung gestellt werden. Auch die Verfahren zum Ermitteln der Parameterfunktionen und das Verfahren zum Validieren der Belichtungsvektoren können auf solchen Rechnern durchgeführt werden. Das Verfahren zum Ermitteln der Parameterfunktionen fd,fl muss nur einmal für ein verwendetes Material durchgeführt werden und kann dann für weitere Objekte verwendet werden. Dazu können geringfügige Anpassung der Parameterfunktionen für bestimmte Objekte erfolgen, es hat sich aber gezeigt, dass das Modell 210 sehr gute Ergebnisse liefert.

Zusammenfassend betrifft die Erfindung ein computerimplementiertes Verfahren zum Ermitteln eines Temperaturverlaufs T einer Schicht 100, für ein selektives Verfestigen der Schicht 100 mittels eines Laser- oder Elektronenstrahls für ein pulverbasiertes additives Fertigungsverfahren auf Basis eines Modells 210. Die Erfindung betrifft weiterhin ein Ermitteln einer von einer lokalen Tiefe lt abhängigen Parameterfunktion fd, fl für ein Modell 210 der Schicht 100 für ein Verfahren zum Ermitteln eines Temperaturverlaufs T, ein Verfahren zum Validieren von Belichtungsvektoren V1,Vn sowie ein Verfahren zum selektiven Verfestigen einer Schicht 100 eines Objekts 10.

Bezugszeichen

| | |
|---|---|
| 10 | Objekt |
| 10' | Anteil des Objekts unterhalb der Schicht |
| 100 | Schicht |
| 210 | Modell der Schicht |
| 310 | dreidimensionales Modell des Objekts |
| 311 | erster Testkörper |
| 312a,...,312f | zweite Testkörper |
| | |
| V1,Vn | Belichtungsvektoren |
| n1,nn | Knotenpunkte |
| | |
| T | Temperaturverlauf der Schicht |
| CTH | ortsabhängige spezifische Wärmekapazität |
| RTH | ortsabhängiger thermischer Widerstand |
| T312a, T312d | Temperaturverlauf eines Testkörpers |
| T210 | Temperaturverlauf der Schicht, mit dem Modell ermittelt |
| fl | erste Parameterfunktion $f_1$ |
| fd | zweite Parameterfunktion $f_d$ |
| x,y,z | Koordinatensystem |

**Patentansprüche**

1. Computerimplementiertes Verfahren zum Ermitteln eines Temperaturverlaufs (T) einer Schicht (100), die ein Querschnitt eines Objekts (10) ist, für ein selektives Verfestigen der Schicht (100) mittels eines Laser- oder Elektronenstrahls für ein pulverbasiertes additives Fertigungsverfahren, umfassend die Schritte:

- Bereitstellen von Belichtungsvektoren (V1,Vn) für die Schicht (100),
- Bereitstellen eines Modells (210) der Schicht (100), wobei das Modell (210):

    - die Schicht (100) und einen unterhalb der Schicht (100) liegenden Anteil (10') des Objekts (10) in Form des Querschnitts repräsentiert und
    - einen unterhalb der Schicht (100) liegenden Anteil (10') des Objekts (10) in Form einer ortsabhängigen spezifischen Wärmekapazität (CTH) und eines ortsabhängigen thermischen Widerstands (RTH) berücksichtigt und

- Ermitteln des Temperaturverlaufs (T) durch thermische Simulation eines Abtastens der Schicht (100) mit den Belichtungsvektoren (V1, Vn) anhand des Modells (210).

2. Verfahren nach Anspruch 1, wobei der ortsabhängige thermische Widerstand (RTH) als erste Parameterfunktion (fl) in Abhängigkeit einer lokalen Tiefe (lt) und/oder die ortsabhängige spezifische Wärmekapazität (CTH) als zweite Parameterfunktion (fd) in Abhängigkeit einer lokalen Tiefe (lt) bestimmt sind.

3. Verfahren nach einem der Ansprüche 1 oder 2, wobei das Modell (210) einen Wärmeverlust in den unterhalb der Schicht (100) liegenden Anteil (10') durch einen ersten Quellterm (QN) in einer zeit- und ortsabhängigen Wärmeleitungsgleichung berücksichtigt.

4. Verfahren nach Anspruch 3, wobei der erste Quellterm (QN) einen ortsabhängigen Belag des thermischen Widerstands durch eine erste Parameterfunktion (fl) berücksichtigt.

5. Verfahren nach Anspruch 3 oder 4, wobei der erste Quellterm (QN) einen ortsabhängigen Belag der Wärmekapazität (CTH) durch eine zweite Parameterfunktion (fd) berücksichtigt.

6. Verfahren nach Anspruch 4 und 5, wobei die erste Parameterfunktion (fl) ein Realteil und die zweite Parameterfunktion (fd) ein Imaginärteil eines ortsabhängigen komplexwertigen thermischen Impedanz-Belags für die ortsabhängige spezifische Wärmekapazität (CTH) und den ortsabhängigen thermischen Widerstand (RTH) ist.

7. Verfahren nach einem der vorhergehenden Ansprüche, wobei das Modell (210) eine Wärme-Einkopplung durch den Laser- oder Elektronenstrahl in die Schicht (100) auf Basis der Belichtungsvektoren (V1,Vn) durch einen zweiten Quellterm (QL) in einer zeit- und ortsabhängigen Wärmeleitungsgleichung berücksichtigt.

8. Verfahren nach einem der vorhergehenden Ansprüche, wobei die ortsabhängige spezifische Wärmekapazität (CTH) und/oder der ortsabhängige thermische Widerstand (RTH) jeweils als diskrete Werte an definierbaren Knotenpunkten (n1,nn) und/oder als eine kontinuierliche Funktion über den Querschnitt definiert sind.

9. Verfahren zum Ermitteln einer von einer lokalen Tiefe (lt) abhängigen Parameterfunktion (fd, fl) für ein Modell (210) einer Schicht (100) für ein Verfahren nach einem der vorhergehenden Ansprüche, wobei das Modell (210) einen unterhalb der Schicht (100) liegenden Anteil (10') des Objekts (10) in Form einer ortsabhängigen spezifischen Wärmekapazität (CTH) und eines ortsabhängigen thermischen Widerstands (RTH) berücksichtigt, umfassend die Schritte:

    - Bestimmen eines ersten Temperaturverlaufs durch thermische Simulation eines Testkörpers (311) bei Bestrahlung durch Belichtungsvektoren (V1,Vn), die so weit von den Grenzen des Testkörpers (311) entfernt liegen, dass sich der Testkörper (311) bezüglich des Temperaturverlaufs wie ein unendlicher Halbraum verhält,
    - Bestimmen von Startparametern für das Modell (210) aus dem ersten Temperaturverlauf,
    - Bestimmen von zumindest einem zweiten Temperaturverlauf durch thermische Simulation eines zweiten Testkörpers (312a,...,312f) bei Bestrahlung durch Belichtungsvektoren (V1,Vn), die derart an den Grenzen des Testkörpers (311) angeordnet sind, dass der Testkörper (311) bezüglich des Temperaturverlaufs Eigenschaften eines begrenzten Raums aufweist und
    - Ermitteln jeweils einer Parameterfunktion (fd,fl) für die spezifische Wärmekapazität (CTH) und den thermischen Widerstand (RTH), sodass ein mittels des Modells (210) ermittelter Temperaturverlauf (T) sich dem ersten und dem zweiten Temperaturverlauf der Testkörper (311) anpasst.

**10.** Verfahren nach Anspruch 9, wobei ab einer hinreichend großen lokalen Tiefe (lt) die Parameterfunktionen (fd,fl) gegen die Startparameter konvergieren.

**11.** Verfahren nach Anspruch 9 oder 10, wobei für eine gegen 0 konvergierende lokale Tiefe (lt) die zweite Parameterfunktion (fd) gegen einen kleineren Wert als der zweite Startparameter konvergiert und die erste Parameterfunktion (fl) gegen einen größeren Wert als der erste Startparameter.

**12.** Verfahren nach Anspruch 9, 10 oder 11, wobei die Parameterfunktionen (fd,fl) monoton sind.

**13.** Verfahren zum Validieren von Belichtungsvektoren (V1,...,Vn) zum selektiven Verfestigen einer Schicht (100) eines Objekts (10) mittels eines Laser- oder Elektronenstrahls für ein pulverbasiertes additives Fertigungsverfahren, umfassend die Schritte:

- Bereitstellen von Belichtungsvektoren (V1,Vn) für die Schicht (100),
- Ermitteln eines Temperaturverlaufs (T) der Schicht (100) mittels eines Verfahrens nach einem der Ansprüche 1 bis 8,
- Validieren des Temperaturverlaufs (T) anhand ein oder mehrerer Kriterien.

**14.** Verfahren nach Anspruch 13, wobei als Kriterium eine Dauer der Temperatur (T) über einer Grenztemperatur dient.

**15.** Verfahren nach Anspruch 13 oder 14, wobei als Kriterium eine absolute Maximaltemperatur dient.

**16.** Verfahren nach Anspruch 13, 14 oder 15, wobei als Kriterium eine maximale Fläche oberhalb einer Temperatur, insbesondere die maximale Größe eines Schmelzbads, dient.

**17.** Verfahren zum selektiven Verfestigen einer Schicht (100) eines Objekts (10) mittels eines Laser- oder Elektronenstrahls durch ein pulverbasiertes additives Fertigungsverfahren, umfassend die Schritte:

- Bereitstellen von Belichtungsvektoren (V1,Vn), die mittels eines Verfahrens nach einem der Ansprüche 13 bis 16 validiert wurden und
- Abtasten der Schicht (10) durch den Laser- oder Elektronenstrahl mit den Belichtungsvektoren (V1,Vn).

FIG 1

10

100

FIG 2

10'

100

FIG 3

EP 4 269 073 A1

FIG 4

V1

Vn

210

n1

RTH    CTH

nn

FIG 5

FIG 6

FIG 7

312a  V1, Vn  E

312b  V1, Vn  E

312c  V1, Vn  E

EP 4 269 073 A1

FIG 8

FIG 9

T312a
T210

FIG 10

T312d
T210

# FIG 11

210

V1, Vn

T

fd, fl

y

x

Europäisches Patentamt
European Patent Office
Office européen des brevets

# EUROPÄISCHER RECHERCHENBERICHT

Nummer der Anmeldung

**EP 22 17 0872**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CAI LINGER ET AL: "Analytical Modelling of Temperature Distribution in SLM Process with Consideration of Scan Strategy Difference between Layers", MATERIALS, [Online] Bd. 14, Nr. 8, 9. April 2021 (2021-04-09), Seite 1869, XP055971975, DOI: 10.3390/ma14081869 Gefunden im Internet: URL:https://www.ncbi.nlm.nih.gov/pmc/artic les/PMC8069252/pdf/materials-14-01869.pdf> [gefunden am 2022-10-17] | 1-5,9, 13-17 | INV. B29C64/393 B33Y10/00 B33Y50/02 B22F10/28 B22F10/366 B22F10/368 B22F10/80 |
| A | * das ganze Dokument * | 6-8, 10-12 | |
| | ----- | | |
| X | FOTEINOPOULOS PANAGIS ET AL: "On thermal modeling of Additive Manufacturing processes", CIRP JOURNAL OF MANUFACTURING SCIENCE AND TECHNOLOGY, [Online] Bd. 20, 1. Januar 2018 (2018-01-01), Seiten 66-83, XP055971756, AMSTERDAM, NL ISSN: 1755-5817, DOI: 10.1016/j.cirpj.2017.09.007 Gefunden im Internet: URL:https://www.sciencedirect.com/science/ article/pii/S1755581717300494/pdfft?md5=24 d9c8ca2dbecb14218fcd07395beec8&pid=1-s2.0- S1755581717300494-main.pdf> [gefunden am 2022-10-17] * das ganze Dokument * | 1,9 | RECHERCHIERTE SACHGEBIETE (IPC) B29C B33Y C22C B22F |
| | ----- | | |

Der vorliegende Recherchenbericht wurde für alle Patentansprüche erstellt

| Recherchenort | Abschlußdatum der Recherche | Prüfer |
|---|---|---|
| Den Haag | 17. Oktober 2022 | Lang, Xavier |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)